# EUROPEAN PATENT SPECIFICATION

(11) **EP 0 847 096 B1**
(45) Date of publication and mention of the grant of the patent: **17.10.2001**
(21) Application number: 97121475.4
(22) Date of filing: 05.12.1997
(51) Int. Cl.: H01M 2/36, H01M 2/26, H01M 6/10

(54) **Method of Producing a Cylindrical Battery**
Verfahren zur Herstellung einer zylindrischen Batterie
Procédé pour la preparation de batterie cylindrique

(30) Priority: 06.12.1996 JP 35744396
(43) Date of publication of application: 10.06.1998
(73) Proprietor: Voltec Pte., Ltd., Singapore 508720 (SG)
(72) Inventor: Nagaura, Toru, Fukuoka-shi, Fukuoka-ken 815 (JP)
(74) Representative: Barz, Peter, Dr.

(56) References cited:
- EP-A- 0 822 604
- DE-A- 1 496 213
- FR-A- 1 586 592
- US-A- 3 775 182
- US-A- 4 053 687
- US-A- 4 255 500
- PATENT ABSTRACTS OF JAPAN vol. 008, no. 013 (E-222), 20 January 1984 -& JP 58 176882 A (SANYO DENKI KK), 17 October 1983,
- PATENT ABSTRACTS OF JAPAN vol. 011, no. 077 (E-487), 7 March 1987 -& JP 61 233963 A (SANYO ELECTRIC CO LTD), 18 October 1986,
- PATENT ABSTRACTS OF JAPAN vol. 014, no. 205 (E-0921), 26 April 1990 -& JP 02 044651 A (FUJI ELELCTROCHEM CO LTD), 14 February 1990,

## Description

This invention relates to the improvement of productivity of a cylindrical battery wherein the electrode element (of the same meaning as battery element) is prepared by winding up the strip-shaped electrodes into a jellyroll structure.

Along with the popularisation of and advances in various portable electronic equipment, such as notebook computers, video cameras etc., batteries with excellent performance are sought after as driving sources and there is an urge to enhance the performance of the conventional nickel-cadmium secondary batteries and nickel-hydrogen secondary batteries. Attention has particularly focused on high-performance lithium-ion secondary batteries with high energy density (Wh/l) due to their high voltages. Lithium-ion secondary batteries are expected to realise the reduction in size as well as weight of portable electronic equipment.

Portable electronic equipment, as typified by video cameras and notebook computers, require enormous amounts of power. Thus, it is the precondition of the batteries used as power sources for such equipment that they can generate large currents while at the same time have large battery capacity (have good draining capability). To create batteries from which large currents can be obtained, the battery internal resistance must be reduced; and to enhance the battery capacity, the filling-up density of the electrodes inside the battery must be increased.

To reduce the battery internal resistance, the electrode surface area must be increased. Based on the conventional technology, thin electrodes of strip shape have been used to increase the electrode surface area.

Presently, the secondary batteries in practice use, no matter non-aqueous lithium-ion secondary batteries or aqueous secondary batteries (such as nickel-cadmium batteries and nickel-hydrogen batteries) are all prepared in the following manner. Prepare the electrode element of a jellyroll structure by winding up the strip-shaped cathode and anode with separator in between, house said electrode element into the cylindrical metallic casing, inject the electrolyte and then seal the casing opening completely. Since the electrode volume determines the battery capacity, the electrodes are wound up as tightly (or firmly) as possible to increase the filling-up density of the electrodes, regardless of whether they are non-aqueous batteries or aqueous batteries.

However in the process of housing the electrode element in the metallic casing and injecting the electrolyte, since it is difficult for the tightly wound electrode element to absorb the electrolyte, it takes an extremely long period to complete the electrolyte injection. It is well understood that the more tightly the electrode element is wound up, the higher the battery capacity. Meanwhile, it is also absolutely essential to impregnate the electrode element with necessary amount of electrolyte to achieve higher capacity. As the impregnation of the electrolyte into the tightly wound electrode element is slow, the electrolyte would overflow the metallic casing if the entire necessary amount of electrolyte is injected at one time.

When the electrode element is housed in the metallic casing, approximately 90% of the content volume (V) of the metallic casing is occupied by the volume (V1) of the electrode element, with the remaining 10% being vacant volume (V2). Furthermore, approximately 50% of the volume (V1) of the electrode element is occupied by the volume (V3) of solid materials, and the remaining 50% is by the volume (V4) of pores. The electrolyte must be primarily impregnated into the volume (V4) of pores. To obtain sufficiently high performance, the electrolyte volume (v), which can impregnate 70% of the volume (V4) of pores, is necessary.

Suppose the content volume (V) of the metallic casing is 100, then the aforementioned volumes will be as follows: the volume (V1) of the electrode element ≒ 90; the vacant volume (V2) ≒ 10; the volume (V3) of the solid materials ≒ 45; the volume (V4) of pores ≒ 45; and the necessary volume (v) of the electrolyte ≒ 32.

Due to the slow impregnation of the electrolyte into the tightly wound electrode element, when the electrode element is housed in the metallic casing, the injected electrolyte is firstly stored in the vacant volume (V2). And the electrolyte is impregnated into the volume (V4) of pores from the vacant volume (V2) after the metallic casing has been made vacuum, pressurised or left for long hours. As the necessary volume (v) of the electrolyte is more than three times of the vacant volume (V2), it can be easily understood that the electrolyte will overflow if the entire necessary amount of the electrolyte is injected into the metallic casing at one time.

Therefore, in the practical manufacturing process the electrolyte is injected in small amount each time and it takes three to five times to complete the injection. In addition each time when the electrolyte is injected, the metallic casing has to be made vacuum or left for long hours for electrolyte impregnation. The electrolyte injection process has become a significant barrier in the manufacturing high capacity batteries.

An object of the present invention is to provide a superior method which can complete the electrolyte injection in a short time in the manufacturing process of the cylindrical battery wherein the electrode element is wound up into a jellyroll structure.

The present invention provides a method of producing a cylindrical battery wherein an electrode element of a jellyroll structure is impregnated with an electrolyte, and housed and completely sealed in a cylindrical metallic casing, said electrode element being firstly housed into the metallic casing with an outer diameter at least 2.9% larger than the outer diameter of the metallic casing of the finished battery, whereafter the electrolyte is injected into said metallic casing and said electrode element is impregnated with the injected electrolyte, and then the outer diameter of the metallic casing is reduced to the same size as the outer diameter of the metallic casing of the finished battery.

So far, in the conventional cylindrical battery wherein an electrode element of a jellyroll structure is housed and sealed in the cylindrical metallic casing, the outer diameter of the metallic casing for the conventional battery (hereinafter referred to as "the conventional metallic casing") adopted is the same size as the outer diameter of the metallic casing of the finished battery. In this case, as mentioned earlier, suppose the volume (V) of said metallic casing is 100, then the relationships of various volumes are as follows : the volume (V1) of the electrode element ≒ 90, the vacant volume (V2) ≒ 10, the volume (V3) of the solid materials ≒ 45, the volume (V4) of pores ≒ 45 and the necessary volume of the electrolyte (v) ≒ 32. In this invention, a metallic casing (hereinafter referred to as "the metallic casing of this invention"), having an outer diameter at least 2.9% larger than the outer diameter of the metallic casing of the finished battery, is used. Therefore, suppose the content volume (V) of "the conventional metallic casing" is 100, then the content volume (V) of "the metallic casing of this invention" is 106, the volume (V1) of the electrode element ≒ 90, the vacant volume (V2) ≒ 16, the volume of solid materials (V3) ≒ 45, the volume (V4) of pores ≒ 45, and the necessary volume (v) of electrolyte ≒ 32.

That is, by using "the metallic casing of this invention", the volume of the metallic casing (V) is increased, and the increased volume gives additional space to the vacant volume (V2) by exactly the same volume.

The electrolyte, which is injected after the electrode element is housed in the metallic casing, is initially stored in the vacant volume (V2) and then impregnated into the volume (V4) of pores. It is evident that the amount of the electrolyte, which can be injected at one time, depends on the vacant volume (V2). Since the vacant volume (V2) is increased when "the metallic casing of this invention" is used, the number of times as well as the period of time to inject electrolyte can be reduced. After the electrolyte injection, the outer diameter of "the metallic casing of this invention" is reduced to the same size as the outer diameter of the metallic casing of the finished battery, and thus the finished battery is of the same external dimensions as those of the conventional battery.

### Brief description of the figures

FIG.1 shows a cross-section of the finished battery.
FIG.2 shows a model drawing of the strip-shaped electrode.
FIG.3 shows a model drawing of the electrode element with a jellyroll structure.
FIG.4 shows a cross-section of the metallic casing.
FIG.5 shows a cross-section of the battery in the process of the electrolyte injection.
FIG.6 shows a principle of the electrolyte injection apparatus
FIG.7 shows a cross-section of the battery before its outer diameter is squeezed.
FIG.8 shows a cross-section of the battery after its outer diameter is squeezed.
FIG.9 shows a cross-section of the finished battery.
FIG.10 shows a principle of Swager
FIG.11 shows a principle of Swaging
FIG.12 shows a cross-sectional view showing the rotation direction of the die.

In the figures, 1 is anode, 2 cathode, 3 separator, 4 metallic casing, 6 electrode lead, 7 sealing cap, 8 gasket, 10 external terminal, 11 hole at the centre of a jellyroll structure, 12 metallic rod, 13 welding point, 20 electrode element, 21 die hole, 22 die, 23 die holder, 24 roller, 26 the direction in which the electrode element is wound up, 27 the direction in which the die holder is rotated, 28 the direction in which the die oscillates, 31 current collector, 32 active substance layer, 42 striation, 51 precision pump, 52 stock tank, 53 regulating pump and 54 injection chamber.

Examples below will explain this invention in further detail.

### Example 1

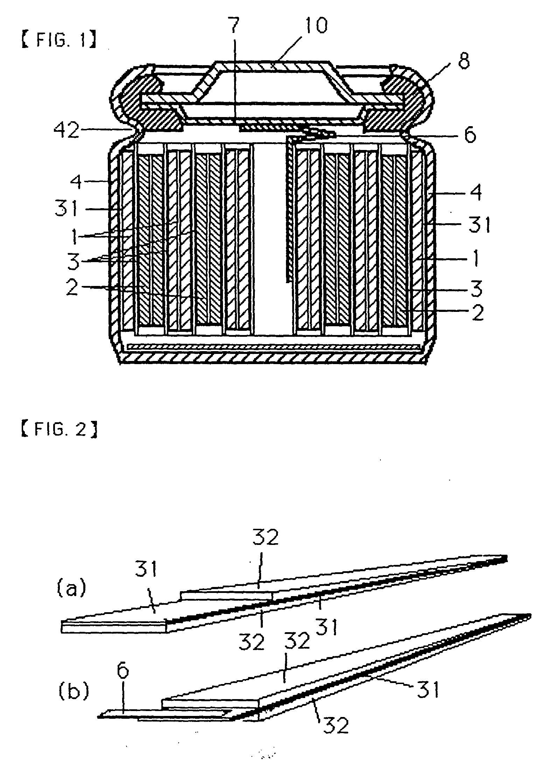

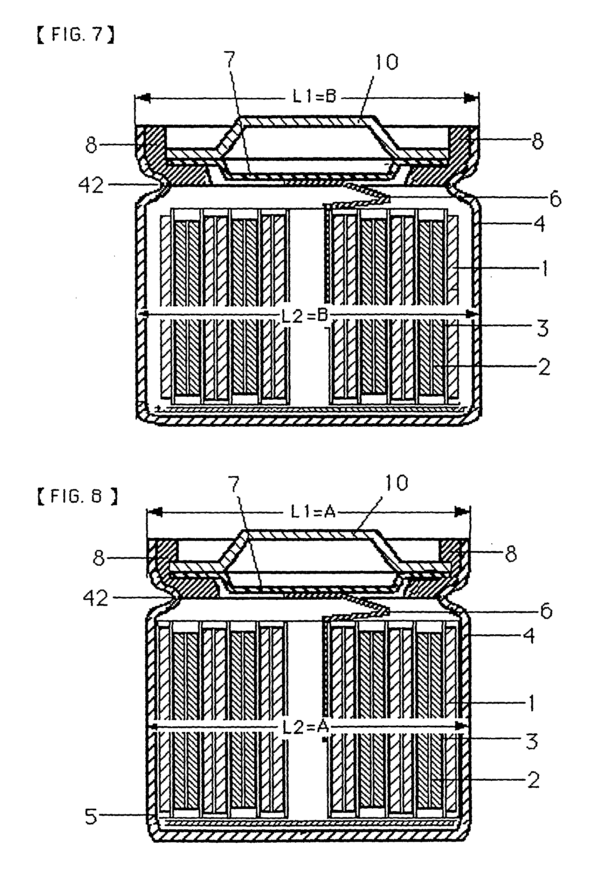

The detailed procedure for making the battery of this invention is to be explained with reference from FIG.1 toFIG.8. To implement this invention, the following metallic casings, each type with different outer diameter, were prepared.

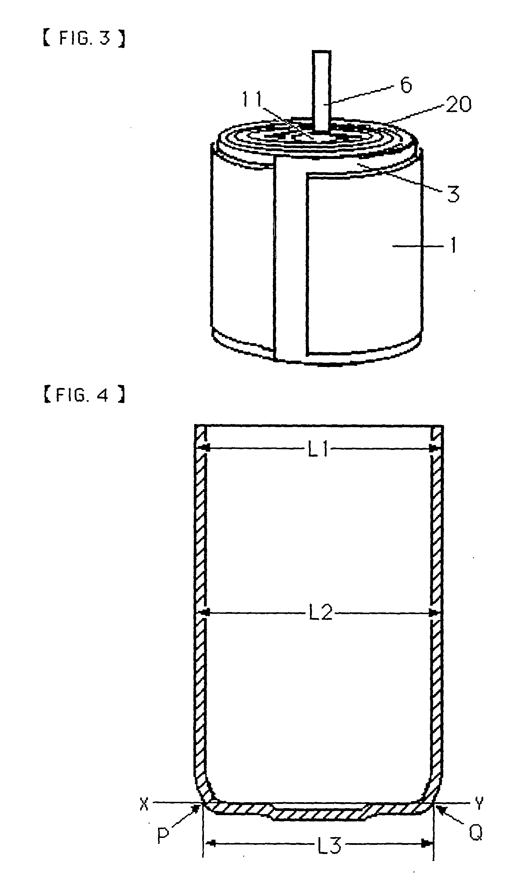

Firstly, prepared nickel-plated iron cylindrical metallic casings (A), with an outer diameter (L1) of the casing opening and an outer diameter (L2) of the central part of the casing of 18.8mm, "the outer diameter of the casing bottom" of 17.0mm, and a height of 65mm as shown in FIG.4. As is shown in FIG.4 of the cross-section of the cylindrical battery casings, the outer diameter (L3), which is measured at the points (P and Q), where the extended lines (X-Y) of the inner surface of the flat casing bottom and the external surface of the casing wall intersect, are defined as "the outer diameter of the casing bottom". Six types of cylindrical metallic casings with different outer diameters as shown from A to F in Table 1 were prepared from the cylindrical metallic casings (A) by squeezing the outer diameters.

**Table 1**

| Cylindrical Metallic Casing | A | B | C | D | E | F |
|---|---|---|---|---|---|---|
| Outer diameter of casing opening (mm) | 18.8 | 18.61 | 18.42 | 18.15 | 17.91 | 17.8 |
| Outer diameter of central part of casing (mm) | 18.8 | 18.61 | 18.42 | 18.15 | 17.91 | 17.8 |
| Outer diameter of casing bottom (mm) | 17.0 | 17.0 | 17.0 | 17.0 | 17.0 | 17.0 |
| Inner diameter of casing (mm) | 18.2 | 18 | 17.81 | 17.53 | 17.29 | 17.18 |

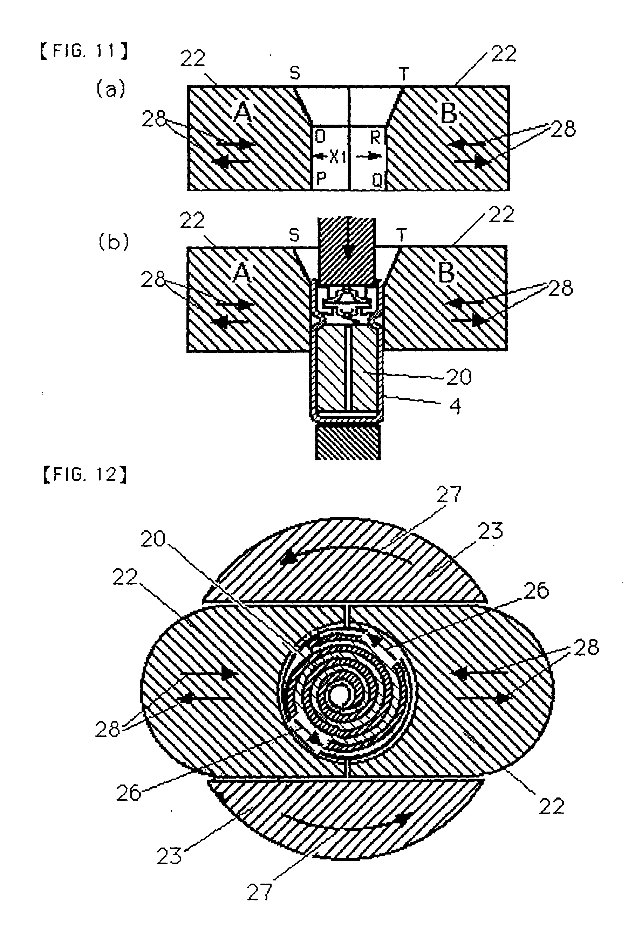

With an apparatus of the same principle as the publicly known Swager, the squeezing of the metallic casing is to be conducted. FIG.10 shows the principle of this apparatus. Being housed in the die holder (23) and placed at the centre, the die (22) with a hole (21) of (X in diameter at the centre is cut into two parts at the centre. A number of (in FIG.10, it is, but unnecessary to be limited to, 8) rollers (24) are placed around. Rotate the die (22), which is cut into two parts, together with the die holder (23) in the direction of the arrow. In the case that there are eight rollers, each time when the die is rotated 45°, it will touch the roller (24), be tightened inwards, and the central gap in the cut-up die (22) will be reduced. When the die is rotated further, it will be away from the roller (24) and the central gap will become wide again. Accordingly, as the two separated parts of the die (22) approach to and separate from each other, the diameter (X of the hole at the centre of the die also becomes smaller or larger. Insert a cylindrical metallic casing into the hole (21) at the centre of this rotating die (22). When the two separated parts of the die (22) approach to each other, namely when the diameter (X of the hole at the centre of the die becomes smaller, the inserted cylindrical metallic casing is tightened and its outer diameter can be reduced. Hereinafter, the above mentioned method for reducing the outer diameter of the metallic casing is referred to as Swaging.

FIGURE 11 illustrates the die (22) in a vertical cross-section. When Die A and Die B are joined together, a close to circular, going-through hole is formed. As is shown in FIG.11, the cross-sectional shape of said hole, in the central cross-section view when Die A and Die B are joined together, consists of a rectangle of O, P, Q, R with one side to be the distance (X₁) between Die A and Die B, and the inverted trapezoid S, O, R, T. The rectangle O, P, Q, R is the place where Swaging process is conducted and the inverted trapezoid S, O, R, T is the entrance for the object to be processed. Since Die A and Die B approach to and separate from each other in the direction of the arrow (28), when Swager is in operation and after the metallic casing is inserted into the rectangle O, P, Q, R, the outer diameter of the metallic casing is squeezed according to the value of X₁. Therefore, the cylindrical metallic casings can be reduced to have various outer diameters by using dies with different X₁ values. In Example 1, by reducing the outer diameter of the cylindrical metallic casings (A), the cylindrical metallic casings (B) were obtained. Next, by reducing the outer diameter of the cylindrical metallic casings (B), the cylindrical metallic casings(C) were obtained. By reducing the outer diameter one by one in the same manner, the six types of battery casings, A-F, with different outer diameters as shown in Table 1, were ready.

The electrode element used in this invention can be then prepared in the following manner.

Firstly prepare the anode in the publicly known conventional method as follows. Dry mix 80 parts by weight of meso-carbon microbeads (d002 = 3.37 Å), which has been heat treated at 2800 °C, with 10 parts by weight of pitch cokes. Then wet mix with N-methyl-2-pyrrolidone, into which 10 parts by weight of polyvinylidene fluoride (PVDF) has been dissolved as a binding agent, to create a slurry. Apply this slurry evenly to both sides of the copper foil of 0.01 mm in thickness, which is to be the anode current collector, leaving an uncoated part of only 56 mm on one side of the copper foil, as shown in FIG.2 (a). Once the coating has dried, conduct pressurised casting with a roll press to make the thickness be 0.157 mm and prepare the strip-shaped anode (1) with high-density active substance layer (32) on the current collector (31). Adjust all the strip-shaped anodes (1) to be 56mm in width and 410mm in length. As shown in FIG.2 (a), at the end of the electrode, there is no active substance on one side of the current collector, and the current collector (31) is left exposed.

The cathode is also prepared by the publicly known conventional method as follows. Thoroughly mix the manganese dioxide (MnO₂) available on the market and lithium carbonate (Li₂CO₃) in the ratio of 1 mol : 0.275 mol, and bake the mixture in air at 800 °C for approximately 12 hours. Repeat the baking process three times to synthesise a spinel-type lithium-manganese compound oxide. Grind this spinel-type lithium-manganese compound oxide into powder form with an average particle size of 0.015 mm in diameter. Mix 90 parts by weight of this powder with 6 parts by weight of graphite as a conductive agent, and then wet mix with N-methyl-2-pyrrolidone, into which 4 parts by weight of PVDF has been dissolved as a binding agent, to form a slurry. Next, apply the slurry evenly to both surfaces of the aluminium foil of 0.02 mm in thickness, which is to be the cathode current collector. Once the coating has dried, conduct pressurised casting with a roll press to make the thickness be 0.281 mm and prepare the strip-shaped cathode (2) with high-density active substance layer (32) on the current collector (31). Adjust all the strip-shaped cathodes (2) to be 55mm in width and 380mm in length. As is shown in FIG.2 (b), at the end of this strip-shaped cathode (2), a part of the aluminium current collector is left exposed; and onto the exposed current collector, an aluminium electrode lead (6) of 4 mm in width and 0.04 mm in thickness is welded.

Wind up the prepared anode (1) and cathode (2) with porous polypropylene separator in between into a jellyroll structure to form an electrode element as shown in FIG.3.

As FIG.3 shows, before winding, place the electrode lead (6) attached to the cathode at the centre of the jellyroll structure; and conduct the winding in such a way that when winding is completed, the end of the anode (1) (with the exposed current collector) is positioned at the outermost periphery of the jellyroll structure. All battery elements (20) used in Example 1 were prepared in this manner.

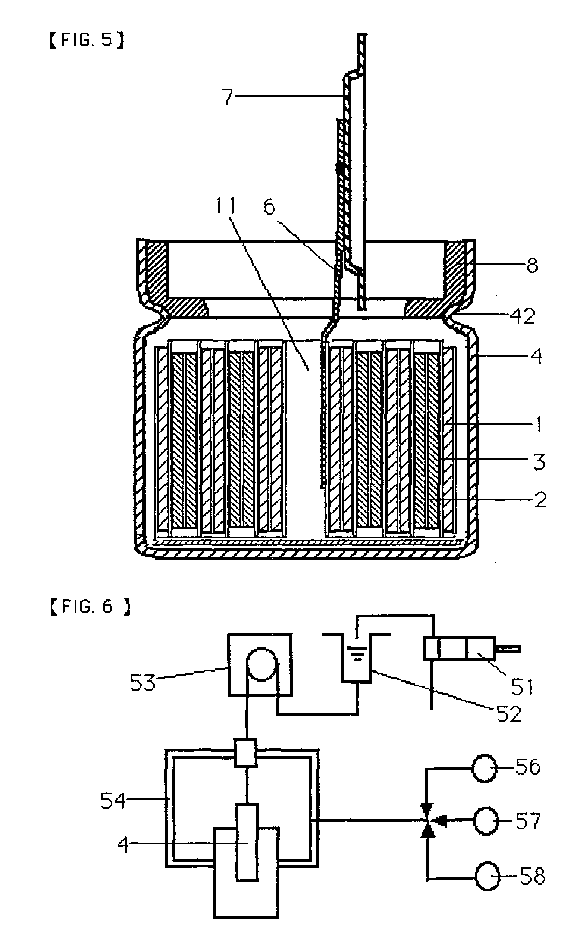

Next, house the above electrode elements in the cylindrical metallic casings D to F, which were prepared in advance. After housing the electrode element in each metallic casing (4), squeeze the metallic casing at a position 60.5 mm from the casing bottom, as shown in FIG.5, create striation (42) to support the gasket, and fix the gasket (8) at the opening of the metallic casing. Following this, as shown in FIG.5, weld the sealing cap (7) to the cathode lead (6), which is protruding from the electrode elements. Next, inject 5.2 g electrolyte (a mixture solvent of ethylene carbonate (EC) and di-ethyl carbonate (DEC), into which 1 mol/l of LiPF₆ has been dissolved) into each metallic casing, in which the electrode element has been housed.

Apart from injecting the necessary amount of the electrolyte into the metallic casing by four times, three times, and two times, it also has been tried to inject the entire amount by just one time.

The electrolyte injection was conducted with the electrolyte injection apparatus, of which principle is shown in FIG.6. Set the metallic casing with the electrode element housed inside (as shown in FIG.5) in the injection chamber (54), and pump 5.2 g electrolyte into the stock tank (52) with precision pump (51). Decrease pressure of the injection chamber (54), and inject the electrolyte from stock tank (52) into the battery with the flow regulating pump (53). When injecting the entire amount of the electrolyte by four times, first time inject only 1.3 g of the total 5.2 g electrolyte in the stock tank into the battery with the flow regulating pump (53). Following that, release the injection chamber to air pressure, and pressurise the inside of chamber to accelerate the impregnating of the electrode element with the electrolyte. Repeat the same process by another three times, and each time inject 1.3 g electrolyte from the stock tank into the battery. There was no overflow of the electrolyte from the metallic casing when the injection was conducted by four times. When injecting the electrolyte by three times and two times, employ the same operation, and divide the 5.2 g electrolyte into three and two parts of the same amount respectively before injecting it from the stock tank into the battery with flow regulating pump (53). After each injection, adopt the same method to accelerate the impregnating of the electrode element with the electrolyte. When the entire amount of the electrolyte was injected by three times, there was slight overflow of the electrolyte in the case of battery casings (F). Likewise, when the entire amount of the electrolyte was injected by two times, there was some overflow in the cases of the battery casings (F) and (E). However the overflow did not occur to the battery casings (D). Next, inject the entire amount of 5.2 g electrolyte at one time from the stock tank (52) into the battery with flow regulating pump (53). The overflow of the electrolyte was observed in all the metallic casings. In FIG.6, 56, 57 and 58 represent the vacuum source, pressure source and pressure release valve, respectively.

After injecting the electrolyte, fix the sealing cap (7), which is welded to the electrode lead (6), inside of the gasket (8), as shown in FIG.7. Lay the cathode external terminal (10) on and in contact with the sealing cap (7), and reduce the outer diameter of the metallic casing to L2 = A = 17.41 mm, as shown in FIG.8. Lastly caulk the rim of the metallic casing. By then, Batteries (D) to Batteries (F) of 17.41mm in outer diameter and 65mm in height with the structure shown in FIG.1 were completed. Batteries (D), (E) and (F) are of three different types with the only variable in each type of batteries is the outer diameter of the metallic casings adopted.

Weighed the finished batteries. By deducting the weight (measured before the electrolyte injection) of all the battery components except the electrolyte from the weight of the finished battery, the amount of the electrolyte stored inside the each battery was calculated and shown in Table 2.

**Table 2**

| | Example of this invention | Example of this invention | Example for comparison |
|---|---|---|---|
| | Battery D | Battery E | Battery F |
| Metallic casing used | D | E | F |
| Outer diameter of the metallic casing used (b mm) | 18.15 | 17.91 | 17.8 |
| Outer diameter of the finished battery (a mm) | 17.41 | 17.41 | 17.41 |
| Outer diameter ratio (b/a) | 1.043 | 1.029 | 1.022 |
| Amount of the electrolyte (mg)/ 4 times injection | 5.19 | 5.19 | 5.18 |
| Amount of the electrolyte (mg)/ 3 times injection | 5.19 | 5.21 | 5.02 |
| Amount of the electrolyte (mg)/ 2 times injection | 5.19 | 4.83 | 4.5 |
| Amount of the electrolyte (mg)/ 1 time injection | 4.03 | 3.5 | 3.2 |

Except for Batteries (F), the entire necessary amount (5.2g) of the electrolyte can be stored in the batteries made in Example 1, by injecting the electrolyte by three times or even less. It means that by using "the metallic casing of this invention" (a metallic casing having an outer diameter at least 2.9% larger than the outer diameter of the finished battery), the number of times to inject the electrolyte can be reduced. The electrolyte, which is injected after the electrode element has been housed in the metallic casing, is temporarily stored in the vacant volume (V2), and then is impregnated from the vacant volume (V2) into the volume (V4) of pores in the electrode element. Accordingly, the vacant volume (V2) determines the amount of electrolyte that can be injected at one time.

With the conventional method, the possible amount of the electrolyte to be injected each time (especially after the second time of injection) is only a quarter of the total necessary amount. As such, the electrolyte injection has to be carried out by four times. By using "the metallic casing of this invention" with an outer diameter at least 2.9% larger than the outer diameter of the finished battery, the content volume of the battery casing has been increased. Moreover, the same amount of the increased volume is added to the vacant volume (V2). As such, the possible amount of the electrolyte to be injected each time can be increased and the number of times to complete the injection can be reduced at least once. However in Table 2, the data of Batteries (F) having an outer diameter of the metallic casing 2.2% larger than that of the finished battery demonstrate that the increased amount of the electrolyte to be injected at one time is still not enough to reduce the number of times, even once. As a result, to impregnate the electrode element with the necessary amount of the electrolyte (5.2 g), the injection still has to be done by four times, the same as the injection times of the conventional method.

In Example 1, the metallic casings were also squeezed with the aforementioned Swager. As shown in FIG.11 (b), by inserting each metallic casing (4) with the electrode element (20) housed inside into the hole at the centre of rotating die (22), the outer diameter of the metallic casing can be squeezed down to the size of that of the finished battery. In the Swaging process of Example 1 after the electrolyte has been injected, the die holder (23) was rotated in the same direction as the electrode element was wound up. That is, as illustrated in FIG.12, the die holder (23) rotates in the direction of the arrow (27), and die (22) vibrates in the direction of another arrow (28). If the electrode element (20) housed in the battery casing, which is inserted in the hole of the die (22), from its centre towards the outside, is wound up in the direction of the arrow (26), the Swaging process will further strengthen the winding of the electrode element.

### Example 2

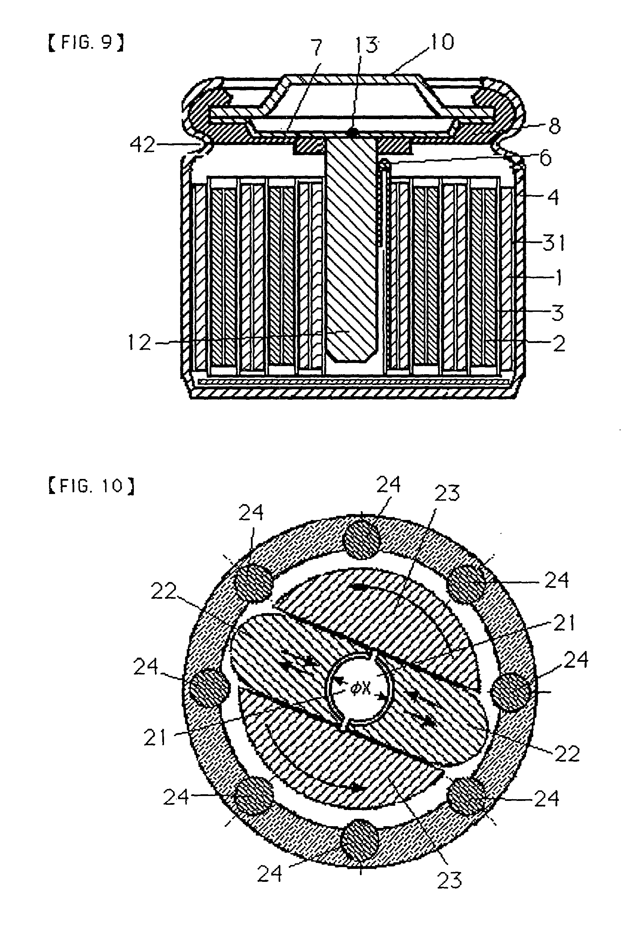

Example 2 of this invention is to be explained with reference to FIG.9.

Prepare the electrode elements in the same way as described in Example 1. House the prepared electrode elements in the cylindrical metallic casings (A) to (C) prepared in Example 1, squeeze the metallic casings at a position 60.5 mm from the casing bottom as shown in FIG.9, and create the striations (42) to support the gaskets. Then inject 5.2 g of the same electrolyte as used in Example 1 into the metallic casings. Two ways have been tried to conduct the electrolyte injection. One is to divide the entire necessary amount into two parts and carry out the injection twice. Another way is to inject the entire necessary amount in just one time. The apparatus for the electrolyte injection as well as the operation procedure is the same as in Example 1.

After injecting the electrolyte, reduce the outer diameter of the metallic casings to 18.15mm with the aforementioned Swager. Next, fold the electrode lead (6) into the hole at the centre of the electrode element as shown in FIG.9, insert the aluminium metallic rod (12) into said hole. In this way, the metallic rod (12) and the electrode lead (6) can be in contact in the hole at the centre of the electrode element; and the electrical conduction between said metallic rod (12) and said electrode lead (6) can be established. After the gasket (8) has been fixed at the opening of the battery casing, the surface of one end of the aforementioned aluminium rod (12) appears from the hole at the centre of the gasket. So when the sealing cap (7) is fixed inside the gasket, the centre of the sealing cap and the surface of one end of the aluminium rod can be in contact. With a laser welder, weld the centre point of the sealing cap (7) to the surface of one end of the aluminium rod. A thinner area in the shape of a cross is made on the sealing cap, so that the sealing cap functions as an explosion-proof valve by splitting and safely releasing the internal pressure when the internal pressure has increased. Then, lay the cathode external terminal (10) on and in contact with the sealing cap (7), and again squeeze the outer diameter of the metallic casing to 17.41mm with Swager as is done in Example 1. Caulk the rim of the metallic casing. By then Batteries (A) to Batteries (C) of 17.41mm in outer diameter and 65mm in height, with a battery structure as shown in FIG.9 were completed. The three types of batteries differ from each other with the only variable of the outer diameter of the metallic casings adopted.

Weighed the finished batteries. Calculated the amount of the electrolyte stored in the batteries by deducting the weight (measured before the electrolyte injection) of all the components except the electrolyte from the weight of the finished batteries. The results are shown in Table 3.

**Table 3**

| | Example of this invention | Example of this invention | Example of this invention |
|---|---|---|---|
| | Battery A | Battery B | Battery C |
| Metallic casing used | A | B | C |
| Outer diameter of the metallic casing used (b mm) | 18.8 | 18.61 | 18.42 |
| Outer diameter of the finished battery (a mm) | 17.41 | 17.41 | 17.41 |
| Outer diameter ratio (b/a) | 1.080 | 1.069 | 1.058 |
| Amount of the electrolyte (mg)/ 2 times injection | 5.19 | 5.18 | 5.2 |
| Amount of the electrolyte (mg)/ 1 time injection | 5.2 | 5.01 | 4.61 |

The data illustrate that for all the batteries in Example 2, the entire necessary amount (5.2g) of electrolyte can be injected into the battery casing only by two times. Moreover, in the case of Batteries (A), the electrolyte injection can be completed by injecting the entire amount (5.2g) into the metallic casing at just one time. It is evident that by using the metallic casing with an outer diameter 5.8% larger than that of the finished battery, the number of times to complete the electrolyte injection can be reduced to less than 2 times effectively.

The results from Example 1 and Example 2 demonstrate that by using a metallic casing with an outer diameter at least 2.9% larger than that of the finished battery, the content volume of the battery casing can be increased. Moreover, it allows the vacant volume (V2) to increase the same amount as the increased volume of the content volume, so that the possible amount of the electrolyte to be injected into the metallic casing at one time is increased and the number of times to complete the electrolyte injection is reduced. Of course the larger the outer diameter of the metallic casing is, the fewer the number of times to complete the electrolyte injection is needed. However, if the outer diameter of the metallic casing becomes unnecessarily large, it is also undesirable because the process to reduce the outer diameter will become complicated.

### Comparison Examples 1 to 3

Batteries of the same type are made under a conventional method to provide a comparison with this invention.

Firstly, further squeeze the outer diameter of cylindrical metallic casings (F) made in Example 1 to prepare cylindrical metallic casings (G) with an outer diameter of 17.41mm. Prepare the electrode elements in the same way as described in Example 1. House the electrode elements into the cylindrical metallic casings (G), and follow all the other procedures as described in Example 1. Then inject the electrolyte into the metallic casings by three times, four times and five times, respectively with the same injection apparatus and the same operation as in Example 1.

After the electrolyte injection, fix the gaskets (8), the sealing caps (7) and the cathode external terminal (10) respectively. Caulk the rim of the metallic casings and seal the battery openings completely without conducting Swaging. Batteries (G1), Batteries (G2) and Batteries (G3) of 17.4mm in outer diameter and 65mm in height and with the same structure as the batteries made in Example 1, were completed.

**Table 4**

| | Comparison Example | | |
|---|---|---|---|
| | 1 | 2 | 3 |
| | Battery G3 | Battery G2 | Battery G1 |
| Metallic casing used | G | G | G |
| Outer diameter of the metallic casing used (b mm) | 17.41 | 17.41 | 17.41 |
| Outer diameter of the finished battery (a mm) | 17.41 | 17.41 | 17.41 |
| Outer diameter ratio (b/a) | 1.000 | 1.000 | 1.000 |
| Amount of the electrolyte (mg) | 5.18 | 5.17 | 4.8 |
| Number of times for electrolyte injection | 5 | 4 | 3 |

To achieve the same battery performance (same battery capacity) as that of the batteries prepared in accordance with this invention, an electrode of the same length must be housed in the finished battery. As the outer diameter of the metallic casings used in this Conventional Example is the same as that of the finished battery, the electrode element has to be wound up as tightly as possible. In a tightly wound electrode element, the electrodes and the separator can not easily absorb the electrolyte, and it is very difficult to impregnate the electrode element with the electrolyte in a short time. The data in Table 4 show that under the conventional method, the electrolyte injection has to be conducted by at least four times in order to store the entire necessary amount (5.2g) of the electrolyte into the battery casing. The long time required for completing the electrolyte injection is apparently a significant hurdle to boosting productivity in the conventional method.

In the battery prepared according to the present invention, a metallic casing with an outer diameter larger than that of the finished battery is used, and after the electrode element has been housed into the metallic casing, the outer diameter is reduced. In this way, the necessary time to complete the electrolyte injection can be successfully reduced. However, the application of this invention is not only limited to Examples presented above. In the above Examples, graphite and lithium-manganese compound oxide are used as anode and cathode active materials respectively to prepare the lithium-ion batteries. In fact, this invention can solve all the same common problems as long as it is a cylindrical battery with an electrode element of a jellyroll structure, which is made by winding up the strip-shape anode and cathode with separator in between and which is housed and sealed completely inside the cylindrical metallic casing after being impregnated with the electrolyte. It is also possible to apply this invention to batteries other than lithium-ion secondary batteries, such as nickel-cadmium secondary batteries, nickel-hydrogen secondary batteries, and lithium primary batteries.

It is the volume of the battery electrodes that determines the battery capacity, no matter whether it is a non-aqueous battery or an aqueous battery. As such, to produce a battery of high capacity, it is essential to wind up the electrodes into a jellyroll structure as tightly (or firmly) as possible to increase the filling-up density of the electrodes. However, in the process of injecting the electrolyte after housing the electrode element in the metallic casing, it is difficult for the tightly wound electrode element to absorb the electrolyte, and the extremely time-consuming electrolyte injection has become a problem in the manufacturing process.

By adopting "the metallic casing of this invention", with an outer diameter at least 2.9% larger than the outer diameter of the metallic casing of the finished battery, the casing content volume can be increased and the same amount of the increased volume is added to the vacant volume (V2). This allows more amount of the electrolyte to be injected at one time, and cuts down the number of times to complete the electrolyte injection.

In consequence, since this invention can significantly improve the productivity of batteries of high capacity in the mass production, and can provide batteries of excellent performance as well as batteries for wide application, it is of enormous industrial value.

## Claims

1. A method of producing a cylindrical battery wherein an electrode element of a jellyroll structure is impregnated with an electrolyte, and housed and completely sealed in a cylindrical metallic casing, said electrode element being firstly housed into the metallic casing with an outer diameter at least 2.9% larger than the outer diameter of the metallic casing of the finished battery, whereafter the electrolyte is injected into said metallic casing and said electrode element is impregnated with the injected electrolyte and then the outer diameter of the metallic casing is reduced to the same size as the outer diameter of the metallic casing of the finished battery.

2. A method as defined in claim 1 wherein an electrode lead brought out near the centre of said electrode element is folded into a hole at the centre of said electrode element, a metallic rod is inserted into said hole, and with said metallic rod and said electrode lead in contact in the hole at the centre of said electrode element, the electric conduction between said metallic rod and said electrode lead is established.

## Patentansprüche

1. Verfahren zur Herstellung einer zylindrischen Batterie, worin ein Elektrodenelement von spiralgewickelter ("jellyroll") Struktur mit einem Elektrolyten imprägniert und in eine zylindrische Metallummantelung eingebracht und vollständig eingeschlossen wird, wobei das Elektrodenelement zunächst in der Metallummantelung mit einem Außendurchmesser, der mindestens 2,9% größer ist als der Außendurchmesser der Metallummantelung der fertiggestellten Batterie, eingebracht wird, wonach der Elektrolyt in die Metallummantelung eingespritzt wird und das Elektrodenelement mit dem eingespritzten Elektrolyten imprägniert wird und dann der Außendurchmesser der Metallummantelung auf die gleiche Abmessung wie der Außendurchmesser der Metallummantelung der fertiggestellten Batterie reduziert wird.

2. Verfahren wie in Anspruch 1 definiert, worin eine nahe der Mitte des Elektrodenelements ausgebrachte Elektrodenleitung in eine Öffnung in der Mitte des Elektrodenelements eingebogen wird, ein Metallstab in die Öffnung eingeführt wird und bei Kontakt des Metallstabs und der Elektrodenleitung in der Öffnung in der Mitte des Elektrodenelements die elektrische Leitung zwischen dem Metallstab und der Elektrodenleitung hergestellt wird.

## Revendications

1. Procédé de fabrication d'une batterie cylindrique dans laquelle une électrode à structure en roulé est imprégnée d'un électrolyte, et logée et renfermée entièrement de manière hermétique dans un boîtier métallique cylindrique, ladite électrode étant d'abord logée dans le boîtier métallique avec un diamètre extérieur au moins 2,9 % plus grand que le diamètre extérieur du boîtier métallique de la batterie finie, après quoi l'électrolyte est injecté dans ledit boîtier métallique et ladite électrode est imprégnée avec l'électrolyte injecté puis le diamètre extérieur du boîtier métallique est réduit jusqu'à la taille du diamètre extérieur du boîtier métallique de la batterie finie.

2. Procédé selon la revendication 1 dans lequel un conducteur d'électrode amené près du centre de ladite électrode est plié dans un trou réalisé au centre de ladite électrode, une tige métallique est insérée dans ledit trou, et avec ladite tige métallique et ledit conducteur d'électrode en contact dans le trou réalisé au centre de ladite électrode, la conduction électrique entre ladite tige métallique et ledit conducteur d'électrode est établie.
